Europäisches Patentamt

European Patent Office

Office européen des brevets

(11) Numéro de publication : **0 315 497 B1**

(12) **FASCICULE DE BREVET EUROPEEN**

(45) Date de publication du fascicule du brevet :
**18.12.91 Bulletin 91/51**

(51) Int. Cl.⁵ : **G01M 17/00,** G01L 5/16,
G01L 1/24, G01L 11/00

(21) Numéro de dépôt : **88402492.8**

(22) Date de dépôt : **03.10.88**

(54) **Dispositif de mesure de la résultante des forces aérodynamiques agissant sur un véhicule automobile.**

(30) Priorité : **04.11.87 FR 8715265**

(43) Date de publication de la demande :
**10.05.89 Bulletin 89/19**

(45) Mention de la délivrance du brevet :
**18.12.91 Bulletin 91/51**

(84) Etats contractants désignés :
**DE GB IT**

(56) Documents cités :
**DE-A- 3 612 599**
**APPLIED OPTICS, vol. 18, no. 9, 1ier mai 1979, pages 1445-1448, Optical Society of America, New York, US; G.B. HOCKER: "Fiber-optic sensing of pressure and temperature"**

(56) Documents cités :
**APPLIED OPTICS, vol. 25, no. 3, 1ier février 1986, pages 340-343, Optical Society of America, New York, US; A. BERTHOLDS et al.: "High-resolution photoelastic pressure sensor using low-birefringence fiber"**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Jarri, Philippe**
**4, Square Gay Lussac**
**F-78330 Fontenay le Fleury (FR)**

(74) Mandataire : **Fabien, Henri et al**
**PEUGEOT SA. DAT / BPI 18, rue des Fauvelles**
**F-92250 La Garenne-Colombes (FR)**

EP 0 315 497 B1

## Description

L'invention a pour objet un dispositif de mesure de la résultante des forces aérodynamiques agissant sur un véhicule automobile. Cette résultante comporte les perturbations de toute nature et notamment celles dûes au vent, induites par d'autres véhicules ou divers éléments de l'infrastructure routière (tunnels, haies, etc...).

La connaissance quasi instantanée de ces perturbations peut être utilisée pour alerter le conducteur ou pour commander une correction automatique de l'angle de braquage des roues directrices du véhicule.

On connait déjà des dispositifs permettant de signaler au conducteur une rafale de vent latéral grâce au déplacement angulaire d'une ailette mobile. De tels dispositifs ne permettent pas de connaître avec précision et un temps de réponse suffisamment court les composantes de la résultante des forces aérodynamiques notamment pour leur utilisation comme paramètres de correction de l'angle de braquage.

Du document DE-A-3612599 on connaît un dispositif pour mesurer les forces aérodynamiques, agissant sur le véhicule, par moyen d'éléments piézo-électriques montés sur toutes les roues du véhicule.

Un dispositif conforme à l'invention utilise les propriétés des fibres optiques comme détecteurs de pression.

Selon une première caractéristique il comporte des moyens à fibres optiques de détection et de mesure des pressions aérodynamiques s'exerçant en différents points du véhicule et des moyens de calcul, en fonction de ces pressions et de la vitesse du véhicule, de la résultante des forces aérodynamiques.

Avantageusement les moyens à fibres optiques comprennent au moins trois bobines de fibres optique implantées au voisinage de la surface extérieure du véhicule, chacune de ces bobines ayant une orientation différente par rapport à l'axe du véhicule. Le dispositif comporte en outre des moyens injectant à l'entrée de chaque bobine un rayonnement lumineux de même nature et de même phase comprenant une première et une deuxième composante, des moyens d'analyse des déphasages d'une part des premières composantes, prises deux à deux, des rayonnements issus des bobines et d'autre part des deuxièmes composantes, également prises deux à deux, des rayonnements issus des bobines et des moyens de calcul, en fonction de ces déphasages et de la vitesse du véhicule, pour déterminer ladite résultante.

Le dispositif peut comporter une source lumineuse unique (LED, laser ou diode laser) et des moyens pour polariser linéairement le rayonnement de cette source suivant les deux modes principaux d'une fibre optique monomode biréfringente à conservation de polarisation constituant les bobines et les faisceaux de liaison, l'un de ces modes constituant la première composante et l'autre la deuxième composante du rayonnement.

Selon une variante le dispositif peut comporter deux sources lumineuses de longueur d'onde différente constituant l'une la première composante et l'autre la deuxième composante du rayonnement.

Selon un mode préféré de réalisation le dispositif comporte à la sortie de chaque bobine des moyens d'analyse séparant les deux composantes, des moyens combinant les premières composantes deux à deux ainsi que les deuxièmes composantes, des photodétecteurs mesurant l'intensité de chaque combinaison des premières de deuxièmes composantes et des moyens de calcul des déphasages des signaux à partir des intensités mesurées.

Les moyens de détection et de mesure des pressions aérodynamiques sont constitués par des bobines de fibre optique disposées à plat au voisinage de la surface extérieure avant du véhicule, dont au moins une à l'avant gauche, une à l'avant droit et une en surface frontale.

Ces bobines sont des bobines collées en surface à l'extérieur d'éléments de carrosserie ou disposées sur la face externe d'un élément de carrosserie plastique lors de la fabrication de cet élément.

Enfin il est particulièrement intéressant de disposer une bobine sur la partie latérale de chaque feu de signalisation avant et la troisième sur le pare-chocs avant.

L'invention va être décrite plus en détail ci-dessous en se référant aux dessins annexés, donnés uniquement à titre d'exemple et dans lesquels :

— La figure 1 est un schéma d'ensemble du dispositif.

— La figure 2 montre l'organisation des circuits optiques et électriques de l'unité de gestion et de traitement.

— La figure 3 montre une variante du générateur des composantes du rayonnement.

— Les figures 4 et 5 représentent en perspective chacune une variante d'implantation d'une bobine de fibre optique sur un bloc clignotant avant gauche.

— Les figures 6 et 7 représentent de la même manière des bobines implantées sur un pare-chocs avant.

— La figure 8 est l'organigramme de calcul de la résultante des forces aérodynamiques.

— La figure 9 montre schématiquement l'implantation sur véhicule des cellules de mesure.

— La figure 10 est un diagramme des vitesse du véhicule et de l'air ambiant.

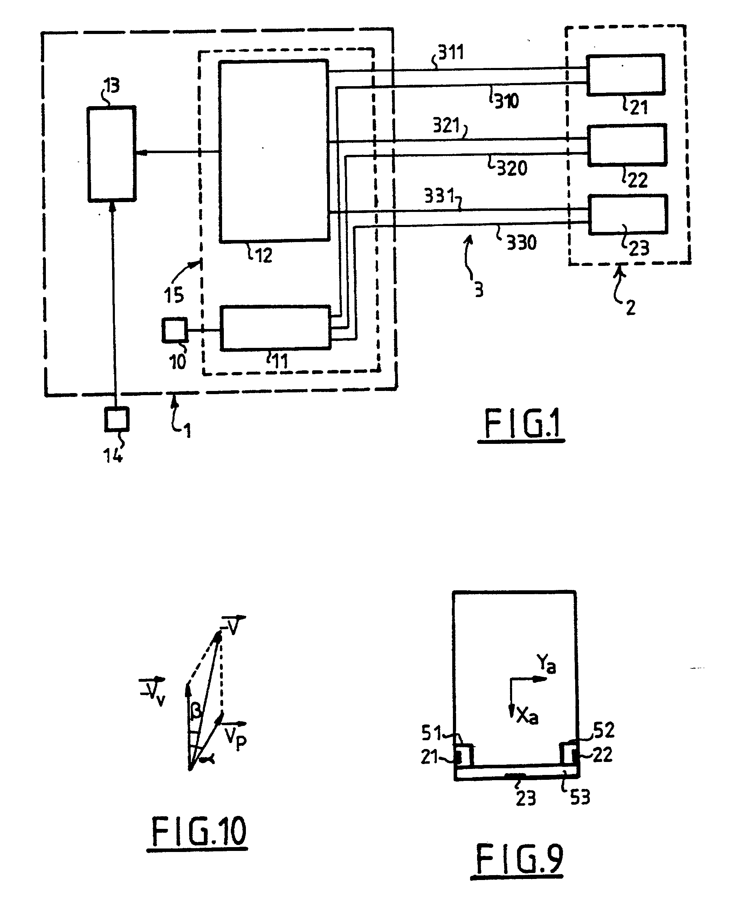

Le dispositif (Figure 1) installé sur un véhicule automobile comporte essentiellement trois sous-ensembles:

— Une unité 1 de gestion et de traitement des signaux comportant une source lumineuse 10 (ou deux sources 10a et 10b), un générateur 11 de deux composantes du rayonnement, une unité d'analyse 12, un calculateur 13 recevant les signaux de l'unité d'analyse 12 et d'un capteur 14 de vitesse du véhicule.

— Un ensemble 2 de trois cellules de mesure 21, 22, 23 implantées respectivement sur le bloc-clignotant avant droit 51, le bloc clignotant avant gauche 52 et le pare-chocs avant 53 du véhicule (figure 9).

— Un ensemble 3 de faisceaux de transmission du rayonnement du générateur 11 aux cellules et des cellules à l'unité d'analyse 12 constitués de fibres optiques de même nature que celles utilisées pour les bobines des cellules de mesure.

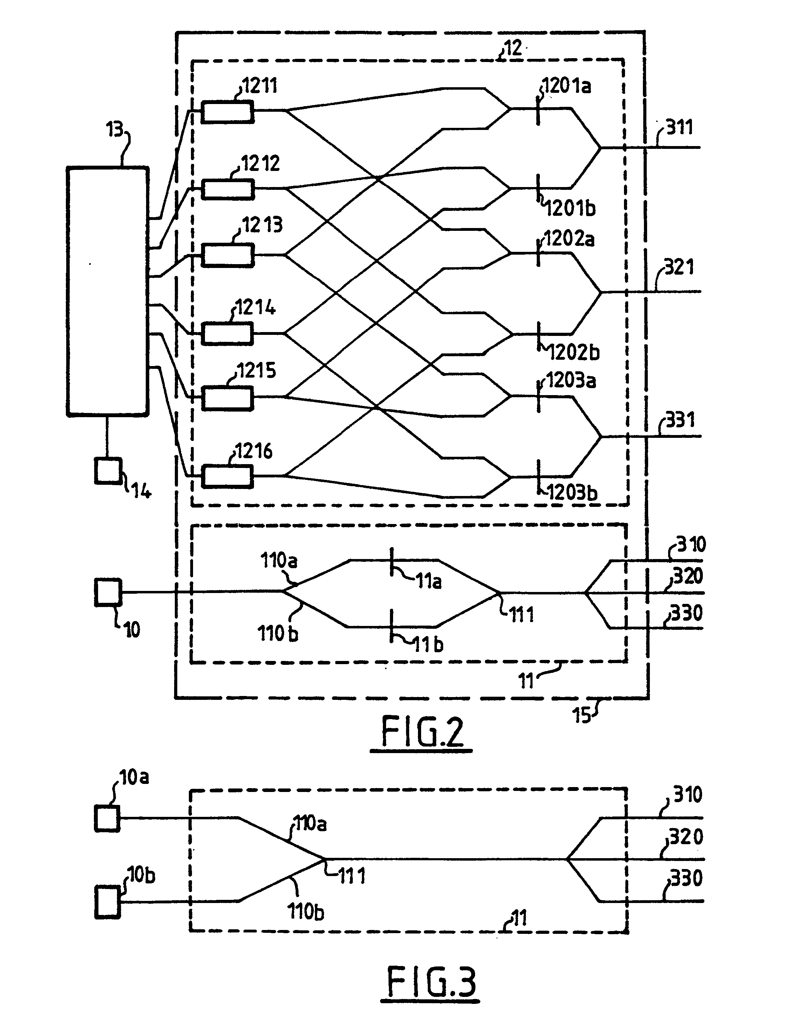

La source lumineuse 10 (LED, laser ou diode laser) émet un rayonnement vers deux fibres optiques 110a et 110b sur chacune desquelles est interposé un polariseur 11a, 11b. Les polariseurs 11a et 11b (figure 2) polarisent linéairement le rayonnement suivant les deux principaux de la fibre optique monomode biréfringente à conservation de polarisation constituant ainsi deux composantes du rayonnement que l'on repèrera par la suite par a ou b. Recombinés en 111, ces signaux sont transmis aux cellules de mesure 21 à 23 par des faisceaux 310, 320, 330 de cette même fibre optique. Les cellules de mesure sont constituées d'une bobine de fibre optique de même nature. Chaque bobine est exposée à la pression et à la température règnant et son point d'implantation sur le véhicule.

L'unité d'analyse 12 recombine les signaux issus des bobines par les faisceaux 311, 321, 331 de façon à fournir au calculateur 13 des informations lui permettant de calculer les composantes des forces aérodynamiques exercées sur le véhicule. A cet effet le rayonnement de chaque bobine est subdivisé en deux. Sur chaque trajet optique est inséré un polariseur 1201a, 1201b-1202a, 1202b-1203a, 1203b. Les polariseurs éliminent la composante a ou b du rayonnement correspondant à leur indice a ou b.

Une variante consiste (Figure 3) à utiliser deux sources lumineuses 10a et 10b de longueurs d'onde différentes. Dans ce cas, il n'est plus nécessaire d'utiliser une fibre biréfringente à conservation de polarisation, une fibre ordinaire monomode étant alors suffisante. Il suffit de combiner en 111 les deux composantes et de remplacer les polariseurs 1201a-1203b par des filtres ne laissant passer qu'une des longueurs d'onde.

En sortie de chaque filtre ou polariseur 1201a... le rayonnement est subdivisé en deux pour combiner deux à deux sans répétition, comme montré en figure 2, d'une part les composantes a et d'autre part les composantes b. Chacune de six combinaisons est ensuite analysée par un photo-détecteur 1211 à 1216. C'est ainsi par exemple que le photo-détecteur 1214 reçoit les composantes b issues du clignotant droit (fibre 321) et du pare-chocs (fibre 331).

L'unité d'analyse 12 et le générateur de polarisation du faisceau incident 11 peuvent être regroupés sur un même circuit optique intégré 15 réalisé selon des procédés connus. Il comprendra sur un même substrat silicium un circuit optique et un circuit électronique.

Le champ éléctromagnétique à la sortie des polariseurs ou des filtres s'exprime sous la forme :

$$E_i^a = E_{°i}^a\, e^{-j(\Omega t - k\delta_i^a)} \qquad ou \qquad E_i^\tau = E_{°i}^\tau\, e^{-j(\Omega^\tau t - k\delta_i^\tau)}$$

avec i : repère de la bobine
a : axe de polarisation (si polarisation)
δ : différence de marche
k : vecteur d'onde
Ω : pulsation du signal
τ : repère de la longueur d'onde (si 2 sources)

Après recombinaison des signaux (4), on obtient :

$$E_{i,j}^{a,b} = E_i^a + E_j^b \qquad ou \qquad E_{i,j}^\tau = E_i^\tau + E_j^\tau$$

Les photo-détecteurs sont sensibles à l'intensité du signal qui s'exprime par : $I = E.E^*$, $E^*$ étant le nombre complexe conjugué de E soit :

$$I_{ij}^{ab} = I_i^a + I_j^b + 2\sqrt{I_i^a I_j^b}\cos(k.(\underbrace{\delta_i^a - \delta_j^b}_{\delta\Phi_{ij}^{a,b}}))$$

ou

$$I_{ij}^{\tau} = I_i^{\tau} + I_j^{\tau} + 2\sqrt{I_i^{\tau} I_j^{\tau}}\cos(k(\delta_i - \delta_j))_{\tau}$$

Le déphasage entre les signaux issus des bobines repérées i et j s'exprime donc ainsi :

$$\delta\Phi_{ij}^{ab} = \text{Arcos}\left[\frac{(I_{ij}^{ab} - I_i^a - I_j^b)}{2\sqrt{I_i^a I_j^b}}\right]$$

ou

$$\delta\Phi_{ij}^{\tau} = \text{Arcos}\left[\frac{(I_{ij}^{\tau} - I_i^{\tau} - I_j^{\tau})}{2\sqrt{I_i^{\tau} I_j^{\tau}}}\right]$$

où Ii est l'intensité du signal issu de la bobine i et Ij celle du signal de la bobine j.

Les déphasages observés sont des fonctions non seulement de la pression exercée sur les bobines de fibre optique mais aussi de la température à laquelle elles sont soumises. Le calcul montre que la connaissance de six déphasages est suffisante pour obtenir les trois différences de pression entre trois bobines prises deux à deux, éliminant ainsi l'effet de la température sur les déphasages mesurés.

On se réfère aux figures 9 et 10 avec les notations suivantes :

Xa : dirigé suivant l'axe avant arrière du véhicule

4

Ya : perpendiculaire à Xa et dans le plan horizontal
β : angle de dérapage aérodynamique
Vv : vitesse véhicule
Vp : vitesse de la résultante des perturbations aérodynamiques
V : vitesse relative du véhicule par rapport à l'air ambiant
α : angle entre la vitesse véhicule et la vitesse de la résultante des perturbations.

La force aérodynamique qui s'exerce sur le véhicule suivant les axes Xa et Ya peut s'exprimer de la manière suivante :

$$Fxa = \tfrac{1}{2} \, \Gamma \; V^2 \; Sxa \qquad\qquad Sxa = S.Cxa$$

$$Fya = \tfrac{1}{2} \, \Gamma \; V^2 \; Sya \qquad\qquad Sya = S.Cya$$

L'angle de dérapage aérodynamique β est alors donné par :

$$tg \, \beta = Fya/Fxa$$

Les pressions régnant sur les bobines 21, 22 et 23 ont respectivement pour expression, Pa étant la pression ambiante :

$$P1 = Pa + Fya/S1 = Pa + P1$$
$$P2 = Pa \qquad\qquad = Pa$$
$$P3 = Pa + Fya/S3 = Pa + P3$$

Dans le cas général, avec Pi <> 0, J<>i et J<>3 :

$$tg \, \beta = (Pj - Pi)S3 \, / \, (P3 - Pi)Sj$$

$$||F|| = \sqrt{(Pj-Pi)^2 \, S^2 \, j + (P3-Pi)^2 \, S^2}$$

La connaissance des paramètres Sxa et Sya permet de calculer le module de la vitesse :

$$||V|| = \sqrt{(Pj-Pi)Sj \, / \, \tfrac{1}{2}\Gamma Sya} = \sqrt{(P3-Pi)S3 \, / \, \tfrac{1}{2}\Gamma Sxa}$$

d'où on déduit le module et l'angle de la vitesse de la résultante des perturbations :

$$||Vp|| = \sqrt{V^2 \, + \, V^2 v \, + \, 2V.Vv \, \cos \beta}$$

$$tg \, \alpha = V \sin \beta \, / \, (\, Vv + V \cos \beta)$$

De même les moments se déduisent de la relation :

$$M = \tfrac{1}{2}\, \rho\, S\, 1\, V^{2}\, Cm$$

où
S est la surface de référence
l la longueur de référence
Cm un coefficient aérodynamique.

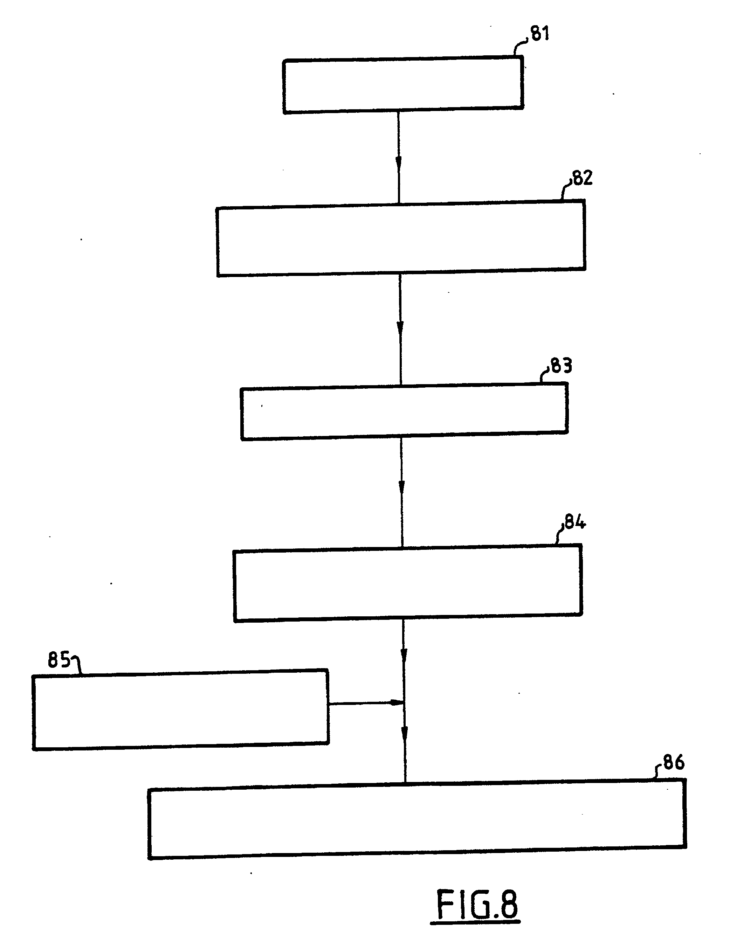

Organigramme de calcul (Figure 8) :

La première étape 81 consiste à lire les valeurs des six déphasages mesurés :

$$\delta \Phi_{ij}^{ab} \qquad ou \qquad \delta \Phi_{ij}^{\tau}$$

A l'étape 82 on calcule les différences de pression entre les trois bobines soit P1-P2, P1-P3, et P2-P3.

On en déduit à l'étape 83 l'angle de dérapage aérodynamique β et la résultante des forces aérodynamiques à l'étape 84. La vitesse et les coefficients aérodynamiques du véhicule introduits à l'étape 85 permettent de calculer à l'étape 86 les forces et moments exercés par les perturbations aérodynamiques sur le véhicule.

On va maintenant décrire différents modes de réalisation et d'implantation des bobines sur les blocs clignotants et sur le pare-chocs.

Une bobine est disposée sur la surface externe de chacun des blocs clignotants avant. Chaque bobine peut être collée en surface.

La bobine est mise en forme puis maintenue en forme et collée par un liant sur la surface externe du bloc clignotant 51 ou 52. Un trou doit alors être pratiqué dans le plastique du bloc afin de réaliser la liaison faisceau-bobine. La bobine peut être aussi intégrée au bloc. A cet effet lors de la fabrication, la fibre est disposée dans le moule de sorte à figurer sur la surface externe de la pièce. Ses deux extrémités sont disposées sur la face interne ce qui élimine la nécessité du perçage de la pièce.

La cellule 23 implantée sur le pare-chocs avant 53 est réalisée suivant un principe analogue à celui décrit ci-dessus.

L'utilisation d'une fibre optique nue pour les bobines (sans protection plastique) permet d'accroître la sensibilité du système. Les bobines seront plates, l'ensemble des spires étant situé dans un même plan. Leurs extrémités seront prolongées jusqu'à l'unité de gestion et de traitement et seront directement couplées au circuit optique intégré assurant l'interfaçage avec la ou les sources lumineuses d'une part et le calculateur d'autre part. Les portions de fibre assurant la liaison bobine-circuit optique seront recouvertes d'une protection plastique afin d'améliorer leurs caractéristiques mécaniques et de réduire l'influence des paramètres extérieurs.

Selon l'espace disponible sur les surfaces portant les bobines, celles-ci pourront prendre diverses formes en vue d'obtenir une longueur suffisante de fibre exposée de manière adéquate aux pressions aérodynamiques à mesurer.

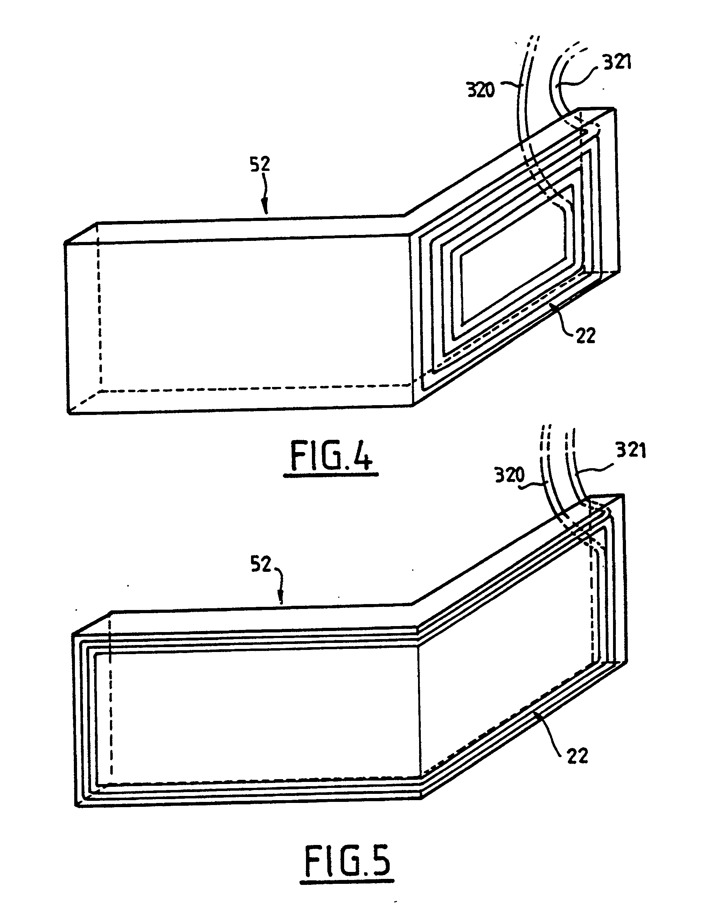

En figure 4 la bobine 22 disposée sur le bloc clignotant avant gauche 52 comporte un nombre de spires plus élevé que dans l'exemple de la figure 5 où la longueur développée est plus grande.

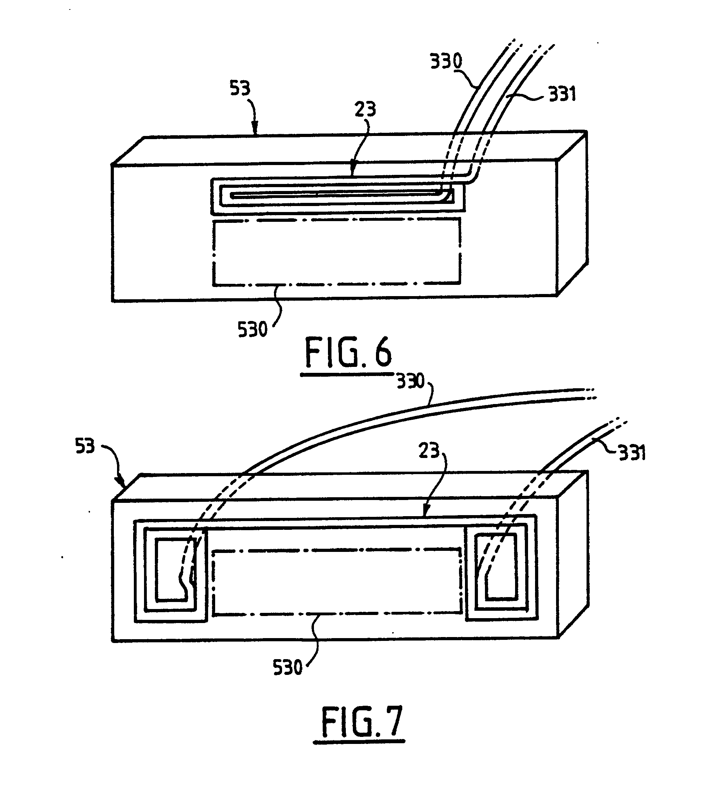

En figure 6 la bobine 23 disposée frontalement sur le pare-chocs avant 53 s'étend transversalement au-dessus de la plaque de police 530, le plan des spires étant perpendiculaire à l'axe Xa du véhicule.

En figure 7 la bobine est au contraire subdivisée en deux parties disposées de part et d'autre de la plaque de police 530.

## Revendications

1. Dispositif de mesure de la résultante des forces aérodynamiques agissant sur un véhicule automobile caractérisé en ce qu'il comporte des moyens à fibres optiques (10, 11, 21-23) de détection et mesure des pressions aérodynamiques s'exerçant en différents points du véhicule et des moyens de calcul (13), en fonction de ces pressions et de la vitesse du véhicule, pour déterminer ladite résultante.

2. Dispositif selon la revendication 1 caractérisé en ce que les moyens à fibres optiques comprennent au moins trois bobines (21-23) de fibre optique implantées au voisinage de la surface extérieure du véhicule, chacune de ces bobines ayant une orientation différente par rapport à l'axe avant arrière Xa du véhicule et en ce qu'il comporte en outre des moyens (10-11) injectant à l'entrée de chaque bobine un rayonnement lumineux de même nature et de même phase comprenant une première et une deuxième composante a et b, des moyens d'analyse (12) des déphasages d'une part des premières composantes a, prises deux à deux, des rayonnements issus des bobines et d'autre part des deuxièmes composantes b, également prises deux à deux, des rayonnements issus des bobines et des moyens de calcul (13), en fonction de ces déphasages et de la vitesse du véhicule, pour déterminer ladite résultante.

3. Dispositif selon la revendication 2 caractérisé en ce qu'il comporte une source lumineuse unique (10) comme LED, laser ou diode laser et des moyens (11a-11b) pour polariser linéairement le rayonnement de ladite source (10) suivant les deux modes principaux d'une fibre optique monomode biréfringente à conservation de polarisation constituant les bobines (21-23) et les faisceaux de liaison (3), l'un de ces modes constituant la première composante a et l'autre la deuxième composante b du rayonnement.

4. Dispositif selon la revendication 2 caractérisé en ce qu'il comporte deux sources lumineuses (10a, 10b) de longueur d'onde différente constituant l'une la première composante a et l'autre la deuxième composante b dudit rayonnement lumineux.

5. Dispositif selon les revendications 3 ou 4 caractérisé en ce qu'il comporte à la sortie de chaque bobine (21-23) des moyens d'analyse (1201a-1203b) séparant les deux composantes, des moyens combinant les premières composantes deux à deux ainsi que les deuxièmes composantes, des photodétecteurs (1211-1216) mesurant l'intensité de chaque combinaison des premières et deuxièmes composantes et des moyens de calcul (13) des déphasages des signaux à partir des intensités mesurées.

6. Dispositif selon l'une quelconque des revendications précédentes caractérisé en ce que les moyens de détection et de mesure des pressions aérodynamiques comportent des bobines de fibre optique disposées à plat au voisinage de la surface extérieure avant du véhicule, dont au moins une (22) à l'avant gauche, une (21) à l'avant droit et une (23) en surface frontale.

7. Dispositif selon l'une quelconque des revendications 2 à 6 caractérisé en ce que les bobines (21-23) sont des bobines plates collées en surface à l'extérieur d'éléments de carrosserie (51-53).

8. Dispositif selon l'une quelconque des revendications 2 à 6 caractérisé en ce que les bobines (21-23) sont des bobines plates disposées sur la face externe d'un élément (51-53) de carrosserie plastique lors de la fabrication de cet élément.

9. Dispositif selon l'une quelconque des revendications 6 à 8 caractérisé en ce qu'une bobine (21, 22) est disposée sur la partie latérale de chaque feu de signalisation avant (51 et 52).

10. Dispositif selon l'une quelconque des revendications 6 à 9 caractérisé en ce qu'une bobine (23) est disposée sur le pare-chocs avant 53 symétriquement, le plan des spires de ladite bobine (23) étant perpendiculaire à l'axe avant arrière Xa du véhicule.

## Patentansprüche

1. Vorrichtung zum Messen der Resultierenden der auf ein Kraftfahrzeug wirkenden aerodynamischen Kräfte, dadurch gekennzeichnet, daß sie Lichtleitfasermittel (10, 11, 21-23, 12) zur Erfassung und Messung der aerodynamischen Drücke, die an verschiedenen Punkten des Fahrzeugs ausgeübt werden, und Rechenmittel (13) zum Bestimmen der Resultierenden in Abhängigkeit von diesen Drücken und von der Geschwindigkeit des Fahrzeugs umfaßt.

2. Vorrichtung gemäß Anspruch 1, dadurch gekennzeichnet, daß die Lichtleitfasermittel wenigstens drei Wicklungen (21-23) von Lichtleitfasern umfassen, die in der Umgebung der Außenfläche des Fahrzeugs eingebracht sind, wobei jede dieser Wicklungen eine in bezug auf die Längsachse Xa des Fahrzeugs verschiedene Orientierung besitzt, und daß sie außerdem Mittel (10-11), die am Eingang einer jeden Wicklung eine Lichtstrahlung derselben Natur und derselben Phase mit einer ersten und einer zweiten Komponente a und b einleiten, Analysemittel (12) für Phasenverschiebungen einerseits der paarweise genommenen ersten Komponenten a der von den Wicklungen ausgegebenen Strahlungen und andererseits der ebenfalls paarweise genommenen zweiten Komponenten b der von den Wicklungen ausgegebenen Strahlungen und Rechenmittel (13) zum Bestimmen der Resultierenden in Abhängigkeit von diesen Phasenverschiebungen und von der Geschwindigkeit des Fahrzeugs umfaßt.

3. Vorrichtung gemäß Anspruch 2, dadurch gekennzeichnet, daß sie eine einzige Lichtquelle (10) wie etwa ein LED, einen Laser oder eine Laserdiode und Mittel (11a, 11b) zum linearen Polarisieren der Strahlung der Quelle (10) entsprechend den zwei Hauptschwingungsarten einer die Wicklungen (21-23) und die Verbindungsbündel (3) bildenden Lichtleitfaser für nur eine Schwingungsart, die bei Erhaltung der Polarisation doppelbrechend wirkt, umfaßt, wobei eine dieser Schwingungsarten die erste Komponente (a) und die andere die zweite Komponente (b) der Strahlung bildet.

4. Vorrichtung gemäß Anspruch 2, dadurch gekennzeichnet, daß sie zwei Lichtquellen (10a, 10b) mit unterschiedlicher Wellenlänge, von denen eine die erste Komponente a und die andere die zweite Komponente b der Lichtstrahlung bildet, aufweist.

5. Vorrichtung gemäß den Ansprüchen 3 oder 4, dadurch gekennzeichnet, daß sie am Ausgang einer jeden Wicklung (21-23) Analysemittel (1201a-1203b), die die zwei Komponenten trennen, Mittel, die paarweise die ersten Komponenten sowie die zweiten Komponenten kombinieren, Photodetektoren (1211-1216), die die Intensität einer jeden Kombination der ersten und zweiten Komponenten messen, und Mittel (13) zum Berechnen der Signal-Phasenverschiebungen anhand der gemessenen Intensitäten umfaßt.

6. Vorrichtung gemäß einem der vorangehenden Ansprüche, dadurch gekennzeichnet, daß die Mittel zur Erfassung und Messung der aerodynamischen Drücke Lichtleitfaserwicklungen aufweisen, die in der Umgebung der vorderen Außenfläche des Fahrzeugs eben angeordnet sind, von denen sich wenigstens eine (22) vorne links, eine (21) vorne rechts und eine (23) direkt an der Vorderseite befindet.

7. Vorrichtung gemäß einem der Ansprüche 2 bis 6, dadurch gekennzeichnet, daß die Wicklungen (21-23) ebene Wicklungen sind, die an der Außenfläche von Karosserieelementen (51-53) aufgeklebt werden.

8. Vorrichtung gemäß einem der Ansprüche 2 bis 6, dadurch gekennzeichnet, daß die Wicklungen (21-23) ebene Wicklungen sind, die an der Außenseite eines Kunststoff-Karosserieelementes (51-53) während der Herstellung des Elementes angeordnet werden.

9. Vorrichtung gemäß einem der Ansprüche 6 bis 8, dadurch gekennzeichnet, daß eine Wicklung (21, 22) im Seitenbereich eines jeden vorderen Signalgebungslichtes (51 und 52) angeordnet ist.

10. Vorrichtung gemäß einem der Ansprüche 6 bis 9, dadurch gekennzeichnet, daß eine Wicklung (23) symmetrisch im vorderen Stoßfänger (53) angeordnet ist, wobei die Windungsebene der Wicklung (23) zur Längsachse Xa des Fahrzeugs senkrecht ist.

## Claims

1. Device for measuring the resultant of the aerodynamic forces acting on a motor vehicle characterized in that it comprises optical fibre means (10, 11, 21-23, 12) for detecting and measuring the aerodynamic pressures exerted at different points of the vehicle and calculating means (13) for determining said resultant as a function of these pressures and of the speed of the vehicle.

2. Device according to Claim 1 characterized in that the optical fibre means comprise at least three coils (21-23) of optical fibre implanted in the vicinity of the external surface of the vehicle, each of these coils having a different orientation with respect to the front/rear axis Xa of the vehicle and in that it also comprises means (10-11) injecting at the input to each coil a luminous radiation of the same nature and of the same phase comprising a first and a second component a and b, means (12) for analysing the phase shifts of, on the one hand, the first components a, taken two by two, of the beams issued from the coils and, on the other hand, the second components b, likewise taken two by two, of the beams issued from the coils and calculating means (13) for determining said resultant as a function of these phase shifts and of the speed of the vehicle.

3. Device according to Claim 2 characterized in that it comprises a single light source (10) such as an LED, laser or laser diode and means (11a-11b) for linearly polarizing the radiation of said source (10) according to the two principal modes of a polarization-retaining bi-refringent monomode optical fibre constituting the coils (21-23) and the transmission beams (3), one of these modes constituting the first component a and the other the second component b of the radiation.

4. Device according to Claim 2 characterized in that it comprises two light sources (10a, 10b) of different wavelength one constituting the first component a and the other the second component b of the said luminous radiation.

5. Device according to Claims 3 or 4 characterized in that it comprises at the output of each coil (21-23) analysing means (1201a-1203b) separating the two components, means combining the first components two by two and the second components, photodetectors (1211-1216) measuring the intensity of each combination of the first and second components and means (13) for calculating the phase shifts of the signals from the measured intensities.

6. Device according to any one of the preceding claims characterized in that the means for detecting and measuring the aerodynamic pressures comprise coils of optical fibre in a flat arrangement in the vicinity of the front external surface of the vehicle, with at least one (22) at front left, one (21) at front right and one (23) on the front surface.

7. Device according to any one of Claims 2 to 6 characterized in that the coils (21-23) are flat coils surface bonded to the exterior of body components (51-53).

8. Device according to any one of Claims 2 to 6 characterized in that the coils (21-23) are flat coils arranged on the external face of a plastic body component (51-53) in the course of fabrication of that component.

9. Device according to any one of Claims 6 to 8 characterized in that a coil (21,22) is arranged on the lateral part of each front indicator light (51 and 52).

10. Device according to any one of Claims 6 to 9 characterized in that a coil (23) is arranged on the front bumper 53 symmetrically, the plane of the turns of said coil (23) being perpendicular to the front/rear axis Xa of the vehicle.

FIG.1

FIG.10

FIG.9

FIG.2

FIG.3

52

320

321

22

## FIG.4

52

320

321

22

## FIG.5

FIG. 6

FIG.7

FIG.8